# EUROPEAN PATENT APPLICATION

(11) **EP 0 809 130 A2**
(43) Date of publication of application: **26.11.1997**
(21) Application number: 97303378.0
(22) Date of filing: 19.05.1997
(51) Int. Cl.: G02F 1/133, G02F 1/1343, G02F 1/1335

(54) **Plasma addressed liquid crystal display with reduced data drive electrode resistivity**

(30) Priority: 24.05.1996 US 18230 P
(71) Applicant: TEKTRONIX, INC., Wilsonville, Oregon 97070-1000 (US)
(72) Inventor: Ilcisin, Kevin J., Beaverton, Oregon 97007 (US); Buzak, Thomas S., Beaverton, Oregon 97007 (US); Martin, Paul C., Vancouver, Washington 98685 (US)
(74) Representative: Burke, Steven David

(57) **Abstract**

An upper substrate assembly for a plasma addressed liquid crystal display panel includes an elongate data drive electrode attached to the upper substrate at its lower surface. The data drive electrode comprises a strip of transparent conductive material extending over substantially the entire length of the data drive electrode and a portion of higher electrical conductivity material than the transparent material and extending over a segment of the length of the data drive electrode.

## Description

### Background of the Invention

This invention relates to a plasma addressed liquid crystal display panel with reduced data drive electrode resistivity.

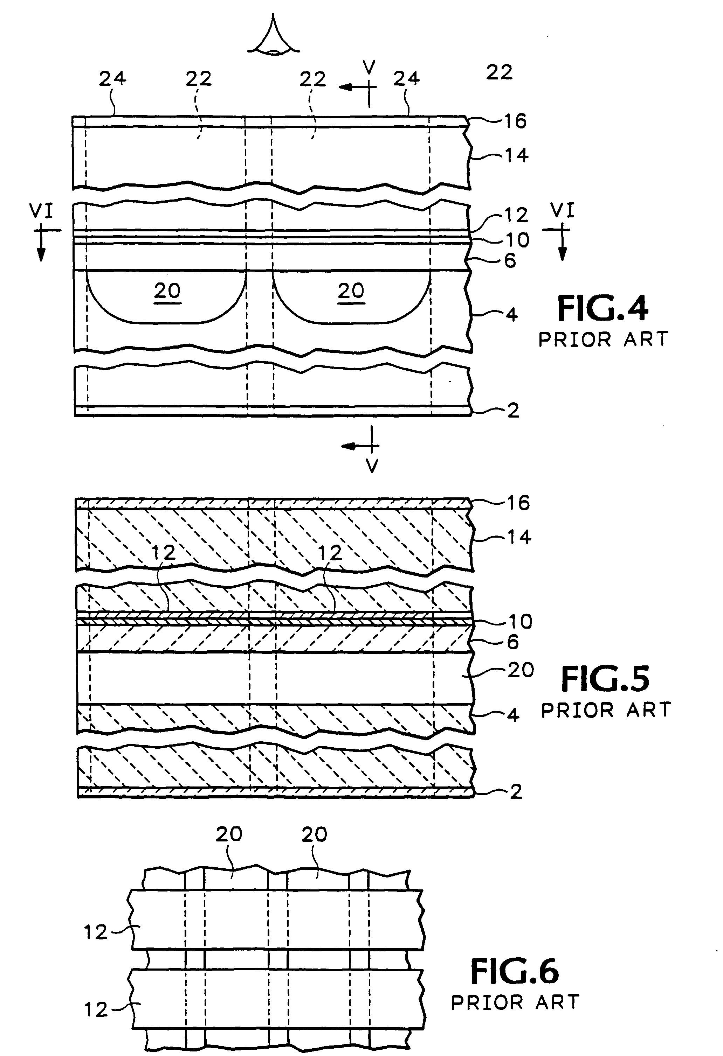

U.S. Patent 5,077,553 discloses apparatus for addressing data storage elements. A practical implementation of the apparatus shown in U.S. Patent 5,077,553 is illustrated schematically in FIGS. 4-6 of the accompanying drawings.

The display panel shown in FIGS. 4-6 comprises, in sequence from below, a polarizer 2, a channel substrate 4, a cover sheet 6 (commonly known as a microsheet) having a thickness of about 50 µm, a layer 10 of electro-optic material having a thickness of about 5 µm, an array of parallel transparent data drive electrodes 12 at uniform width and spacing, an upper substrate 14 carrying the data drive electrodes, and an upper polarizer 16. Depending on the application, the distance across the gap between two adjacent data drive electrodes is typically in the range from 50 µm to 200 µm. The channel substrate 2 is typically made of glass and is formed with multiple parallel channels 20 in its upper main face. The channels 20 are filled with an ionizable gas, such as helium. A ground electrode and a strobe electrode (not shown) are provided in each of the channels 20. The channels 20 are orthogonal to the data drive electrodes 12 and the region where a data drive electrode crosses a channel (when viewed perpendicularly to the panel) forms a discrete panel element 22. Each panel element can be considered to include elements of the layer 10 and the upper and lower polarizers 2 and 16. In the case of a color display panel, the panel elements include color filters (not shown) between the layer 10 and the upper substrate 14. Adjacent panel elements 22 are spaced apart along a data drive electrode 12 and/or a channel 20, as shown in FIG. 6. The region of the upper surface of the display panel that bounds the panel element constitutes a single pixel 24 of the display panel.

As explained in U.S. Patent 5,077,553, when a suitable potential difference is established between the strobe and ground electrodes in one of the channels, the gas in that channel forms a plasma that provides a conductive path at the lower surface of the cover sheet 6. If a data drive electrode is at ground potential, there is no significant electric field in the volume element of electro-optic material where the data drive electrode crosses the channel and the pixel is considered to be off, whereas if the data drive electrode is at a substantially different potential from ground, there is a substantial electric field in that volume element of electro-optic material and the pixel is considered to be on. An extended light source (not shown) is provided beneath the panel. In the event that a pixel is off, the upper polarizer passes light received from the volume element of electro-optic material and the pixel is illuminated, whereas if a pixel is on, the upper polarizer blocks light received from the volume element of electro-optic material and the pixel is not illuminated. Black surround material (not shown) is provided between adjacent panel elements in order to absorb stray light and preserve maximum contrast between a pixel that is on and a pixel that is off.

When a voltage is applied to a data drive electrode in order to change the potential of the electrode, a finite time elapses before the data drive electrode reaches the desired potential. The length of time depends on the resistivity of the data drive electrode, among other factors. The data drive electrodes are made of indium tin oxide (ITO), which has a substantially higher resistivity than a metal, such as gold.

In order to avoid objectionable flicker, it is necessary to refresh the image displayed by a plasma addressed liquid crystal display panel at a rate of at least about 60 Hz. The number of lines of data that can be displayed in a field at a refresh rate of 60 Hz depends in part on the time taken to change the potential of a data drive electrode. In order to maximize the number of lines of data that can be displayed, it is necessary that the resistivity of the data drive electrodes be minimized.

It is conventional to assembly a display panel of the kind shown in FIGS. 4-6 by forming a channel substrate assembly, including the channel substrate and the cover sheet, forming an upper substrate assembly, including the upper substrate, the data drive electrodes, and the layer of electro-optic material, and attaching the upper substrate assembly to the channel substrate assembly.

### Summary of the Invention

In accordance with a first aspect of the invention, there is provided a plasma addressed liquid crystal display panel including an upper substrate having a lower surface, an elongate data drive electrode attached to the upper substrate at the lower surface thereof and comprising a strip of transparent conductive material extending over substantially the entire length of the data drive electrode and at least one portion of higher electrical conductivity material than the transparent material and extending over at least a segment of the length of the data drive electrode.

In accordance with a second aspect of the invention, there is provided an upper substrate assembly for a plasma addressed liquid crystal display panel, said upper substrate assembly including an upper substrate having a lower surface, an elongate data drive electrode attached to the upper substrate at the lower surface thereof and comprising a strip of transparent conductive material extending over substantially the entire length of the data drive electrode and at least one portion of higher electrical conductivity material than the transparent material and extending over at least a segment of the length of the data drive electrode.

### Brief Description of the Drawings

For a better understanding of the invention, and to show how the same may be carried into effect, reference will now be made, by way of example, to the accompanying drawings, in which
FIG. 1A is a bottom plan view of the upper substrate of a first plasma addressed liquid crystal display panel in accordance with the present invention,
FIG. 1B is a sectional view taken on the line IB-IB of FIG. 1A, before applying black surround material and color filters,
FIG. 1C is a sectional view similar to FIG. 1B, but on an enlarged scale, after application of black surround material and color filters,
FIG. 2A is a bottom plan view of the upper substrate of a second plasma addressed liquid crystal display panel in accordance with the present invention,
FIGS. 2B-2D illustrate steps in manufacture of the substrate shown in FIG. 2A,
FIG. 3A is a bottom plan view of the upper substrate of a third plasma addressed liquid crystal display panel in accordance with the present invention,
FIG. 3B is a sectional view taken on the line 3B-3B in FIG. 3A,
FIG. 4 is an enlarged sectional view of a known type of plasma addressed liquid crystal display panel,
FIG. 5 is a sectional view taken along the line V-V of FIG. 4, and
FIG. 6 is a sectional view taken along the line VI-VI of FIG. 4, drawn to a reduced scale.

In the several figures of the drawings, like reference numerals are used to denote corresponding elements.

Words of orientation and position, such as upper and lower, are used in this specification to establish orientation relative to the drawings and are not intended to be limiting in an absolute sense. Thus, a surface that is described as upper in the specification may correspond, in a practical implementation of the invention, to a lower surface or a vertical surface, which is neither upper nor lower.

### Detailed Description

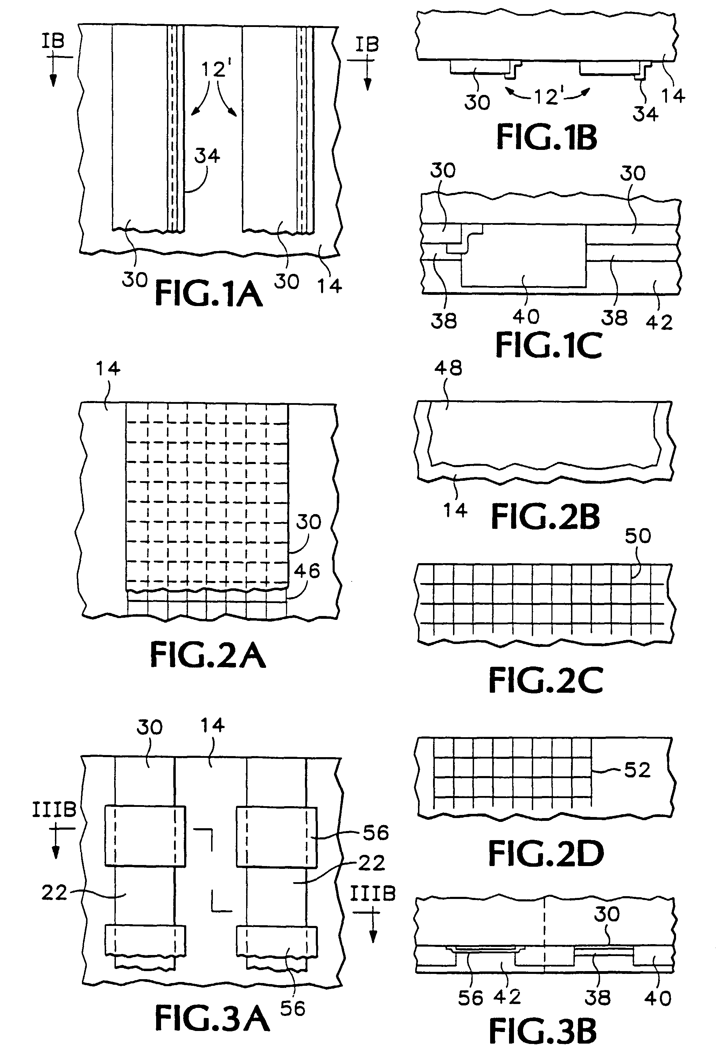

The upper substrate 14 shown in FIG. 1A is made of glass and has composite data drive electrodes 12' adhered thereto. Each composite data drive electrode 12' is formed from a strip 30 of ITO and a strip 34 of metal extending along an edge of the ITO strip 30. The ITO strips 30 are formed on the substrate 14 using known techniques. The metal strips 34 are preferably deposited after the ITO strips 30 have been formed, so that each metal strip 34 partially overlaps an ITO strip 30 and a reliable electrical connection is established between the two strips. The resistivity of the composite electrode 12' is reduced relative to that of an electrode that is made of ITO only in accordance with a factor that depends on the relative conductivities of the metal and ITO and the relative cross-sectional areas of the strip of metal and the strip of ITO. The conductivity of the metal is substantially higher than that of ITO, and so there is a substantial reduction in resistivity relative to an electrode of ITO. Since the metal strip 34 is narrow, it does not occlude significantly the panel element.

After the metal strips have been deposited, color filters 38 (FIG. 1C) are deposited on the data drive electrodes within the panel elements, and black surround material 40 is deposited between the panel elements. The lower surface of the composite structure (comprising the substrate 14, the composite data drive electrodes 12', the color filters 38 and the black surround material 40) is planarized by spinning on a layer 42 of benzocyclobutene, and heating the benzocyclobutene to cure it.

In the case of a display panel that is to be viewed in a room with ambient illumination, it is undesirable that the metal strips should reflect room light to the viewer. This can be avoided by employing a metal in a non-reflective state, such as black chrome, for the metal strips. In this case, the metal strips form part of the black surround.

If in a particular case it is desired that the strips 34 be made of a metal that is reflective, reflection of room light toward the viewer can be reduced by depositing the metal strips after the black surround material and before the composite structure is planarized. In this case, the portion of the metal strip that extends over the ITO strip will reflect room light toward the viewer, so it is desirable that the width of this portion of the strip be minimized.

Although FIGS. 1A-1C show use of a single metal strip 34 along one edge of each ITO strip 30, additional reduction in resistivity may be accomplished by providing two metal strips, one along each edge of the ITO strip.

In the case of the upper substrate shown in FIG. 2A, the composite data drive electrode comprises a strip 30 of ITO and a fine mesh 46 of metal between the ITO strip 30 and the upper substrate. In order to fabricate this structure, a layer 48 of metal is deposited over the entire lower surface of the upper substrate 14 (FIG. 2B) and the layer is patterned to form a mesh 50 (FIG. 2C) of interconnected strands defining openings. The total area of the openings is substantially greater than half the total area of the mesh and the strands themselves are very narrow, e.g. 3-5 µm wide, so that they will not occlude significantly the panel element. After patterning the layer 48 to form the mesh 50, parallel strips of the mesh are removed leaving strips 52 of mesh adhering to the lower surface of the substrate 14 (FIG. 2D). The locations and width of the strips of mesh that remain are selected so that when the ITO strips are formed, they are not interconnected by the strips of mesh that remain. However, it is not necessary for the ITO strips to be in perfect registration with the mesh strips in order to avoid interconnection of the ITO strips.

In FIGS. 2A-2D, the openings in the mesh are illustrated as being square. However, other shapes, such as hexagonal, may be used instead. Because the mesh is made of metal and is continuous in the direction of the length of the data drive electrodes, the resistivity of the composite data drive electrode is substantially less than that of a data drive electrode made of ITO only.

The arrangement shown in FIGS. 2A-2D results in the resistivity of the composite data drive electrode being fairly uniform over the entire length of the data drive electrode, since the mesh is uniform and is essentially coextensive with the ITO strip. However, it is not essential that the resistivity of the composite data drive electrode be uniform over the length of the data drive electrode.

In the case of FIGS. 3A-3B, transverse strips 56 of metal are deposited across each ITO strip 30 between successive panel elements. The transverse metal strips 56 provide segments along the length of each composite data drive electrode at which the resistivity is substantially less than that of ITO, and accordingly over these segments the resistance of the composite electrode to current flow is substantially less than over the intervening segments of the electrode. The transverse metal strips 56 do not encroach on the panel element 22 and therefore they do not occlude the panel element. As in the case of the longitudinal metal strips 30 of FIGS. 1A-1C, it is desirable that the transverse metal strips 56 of FIGS. 3A-3B not reflect ambient light toward the viewer, and so it is preferred that the metal be non-reflective. The black surround material 40 is provided only between the data drive electrodes because the transverse metal strips 56 block stray light between the pixel areas along a given data drive electrode.

It will be appreciated that the invention is not restricted to the particular embodiments that have been described, and that variations may be made therein without departing from the scope of the invention as defined in the appended claims and equivalents thereof. For example, although in the case of FIGS. 1A-1C it is preferred that the metal strips be deposited after the ITO strips are formed, and that the metal strips should overlap the ITO strips, neither of these features is essential.

## Claims

1. A plasma addressed liquid crystal display panel including:
an upper substrate having a lower surface,
an elongate data drive electrode attached to the upper substrate at the lower surface thereof and comprising a strip of transparent conductive material extending over substantially the entire length of the data drive electrode and at least one portion of higher electrical conductivity material than the transparent material and extending over at least a segment of the length of the data drive electrode.

2. A display panel according to claim 1, wherein the portion of higher conductivity material is at least one strip that extends over substantially the entire length of the data drive electrode.

3. A display panel according to claim 2, wherein the strip of higher conductivity material partially overlaps the strip of transparent conductive material and is made of metal in a substantially non-reflective state.

4. A display panel according to claim 1, wherein the portion of higher conductivity material is a mesh of interconnected strands that define openings, and the open area of the mesh is substantially greater than half the total area of the mesh.

5. A display panel according to claim 4, wherein the mesh has an extent parallel to said lower surface that is substantially equal to that of the strip of transparent conductive material.

6. A display panel according to claim 1, wherein the portion of higher conductivity material is at least one strip of high conductivity material that extends transversely of the strip of transparent conductive material.

7. A display panel according to claim 6, wherein the display panel includes a plurality of panel elements distributed along the strip of transparent conductive material, and the data drive electrode comprises multiple such strips of high conductivity material that extend transversely of the strip of transparent conductive material, and each transverse strip of high conductivity material is located between two successive panel elements along the data drive electrode.

8. A display panel according to claim 7, wherein the transverse strips of high conductivity material are made of metal in a substantially non-reflective state.

9. An upper substrate assembly for a plasma addressed liquid crystal display panel, said upper substrate assembly including:
an upper substrate having a lower surface,
an elongate data drive electrode attached to the upper substrate at the lower surface thereof and comprising a strip of transparent conductive material extending over substantially the entire length of the data drive electrode and at least one portion of higher electrical conductivity material than the transparent material and extending over at least a segment of the length of the data drive electrode.

10. An upper substrate assembly according to claim 9, wherein the portion of higher conductivity material is at least one strip that extends over substantially the entire length of the data drive electrode.

11. An upper substrate assembly according to claim 10, wherein the strip of higher conductivity material partially overlaps the strip of transparent conductive material and is made of metal in a substantially non-reflective state.

12. An upper substrate assembly according to claim 9, wherein the portion of higher conductivity material is a mesh of interconnected strands that define openings, and the open area of the mesh is substantially greater than half the total area of the mesh.

13. An upper substrate assembly according to claim 12, wherein the mesh has an extent parallel to said lower surface that is substantially equal to that of the strip of transparent conductive material.

14. An upper substrate assembly according to claim 9, wherein the portion of higher conductivity material is at least one strip of high conductivity material that extends transversely of the strip of transparent conductive material.

15. An upper substrate assembly according to claim 14, wherein the display panel includes a plurality of panel elements distributed along the strip of transparent conductive material, and the data drive electrode comprises multiple such strips of high conductivity material that extend transversely of the strip of transparent conductive material, and each transverse strip of high conductivity material is located between two successive panel elements along the data drive electrode.

16. An upper substrate assembly according to claim 15, wherein the transverse strips of high conductivity material are made of metal in a substantially non-reflective state.
